# EUROPEAN PATENT APPLICATION

(11) **EP 4 152 280 A2**
(43) Date of publication of application: **22.03.2023**
(21) Application number: 22214622.7
(22) Date of filing: 19.12.2022
(51) Int. Cl.: G06V 30/41

(54) **METHOD AND APPARATUS FOR RECOGNIZING TEXT, AND METHOD AND APPARATUS FOR TRAINING TEXT RECOGNITION MODEL**

(30) Priority: 20.12.2021 CN 202111560326
(71) Applicant: Beijing Baidu Netcom Science Technology Co., Ltd., Beijing 100085 (CN)
(72) Inventor: ZHANG, Chengquan, Beijing, 100085 (CN); LV, Pengyuan, Beijing, 100085 (CN); YAO, Kun, Beijing, 100085 (CN); HAN, Junyu, Beijing, 100085 (CN); LIU, Jingtuo, Beijing, 100085 (CN)
(74) Representative: advotec.

(57) **Abstract**

A method for recognizing text includes: obtaining an image sequence feature of an image to be recognized; obtaining a full text string of the image to be recognized by decoding the image sequence feature; obtaining a text sequence feature by performing a semantic enhancement process on the full text string, in which the image sequence feature, the full text string and the text sequence feature are of the same length; and determining text content of the image to be recognized based on the full text string and the text sequence feature.

## Description

### TECHNICAL FIELD

The disclosure relates to the field of artificial intelligence technology, particularly to the field of deep learning and computer vision technology which can be applied to scenes such as optical character recognition (OCR), and more particularly to, a method for recognizing text, a method for training a text recognition model, an apparatus for recognizing text, and an apparatus for training a text recognition model.

### BACKGROUND

OCR is widely used in various fields and refers to a process in which an electronic device examines characters printed on paper and translates the characters into computer text by means of detection and character recognition.

Attention mechanism is one of typical methods of OCR. The most representative implementation method of the attention mechanism is a correction network guided by recognition results (ASTER), and the method obtains text content in an image to be recognized by means of attention enhancement and reinforcement of historical recognition content.

However, when the text in the image to be recognized is long, error accumulation may easily occur, resulting in low accuracy of text recognition.

### SUMMARY

The disclosure provides a method for recognizing text, a method for training a text recognition model, an apparatus for recognizing text, and an apparatus for training a text recognition model, so as to improve the accuracy of text recognition.

According to a first aspect of the disclosure, a method for recognizing text is provided. The method includes: obtaining an image sequence feature of an image to be recognized; obtaining a full text string of the image to be recognized by decoding the image sequence feature; obtaining a text sequence feature by performing a semantic enhancement process on the full text string, in which the image sequence feature, the full text string, and the text sequence feature are of the same length; and determining text content of the image to be recognized based on the full text string and the text sequence feature.

According to a second aspect of the disclosure, a method for training a text recognition model is provided. The method includes: obtaining an image sequence feature of a sample image; obtaining a full text string of the sample image by decoding the image sequence feature; obtaining a text sequence feature by performing a semantic enhancement process on the full text string, in which the image sequence feature, the full text string, and the text sequence feature are of the same length; determining prediction text content of the sample image based on the full text string and the text sequence feature; and training the text recognition model by comparing the prediction text content with predetermined calibrated text content, in which the text recognition model is configured to recognize text content of an image to be recognized.

According to a third aspect of the disclosure, an apparatus for recognizing text is provided. The apparatus includes: a first obtaining unit, a first decoding unit, a first enhancement unit and a first determining unit. The first obtaining unit is configured to obtain an image sequence feature of an image to be recognized. The first decoding unit is configured to obtain a full text string of the image to be recognized by decoding the image sequence feature. The first enhancement unit is configured to obtain a text sequence feature by performing a semantic enhancement process on the full text string, in which the image sequence feature, the full text string, and the text sequence feature are of the same length. The first determining unit is configured to determine text content of the image to be recognized based on the full text string and the text sequence feature.

According to a fourth aspect of the disclosure, an apparatus for training a text recognition model is provided. The apparatus includes: a second obtaining unit, a second decoding unit, a second enhancement unit, a second determining unit and a training unit. The second obtaining unit is configured to obtain an image sequence feature of a sample image. The second decoding unit is configured to obtain a full text string of the sample image by decoding the image sequence feature. The second enhancement unit is configured to obtain a text sequence feature by performing a semantic enhancement process on the full text string, in which the image sequence feature, the full text string, and the text sequence feature are of the same length. The second determining unit is configured to determine prediction text content of the sample image based on the full text string and the text sequence feature. The training unit is configured to train the text recognition model by comparing the prediction text content with predetermined calibrated text content, in which the text recognition model is configured to recognize text content of an image to be recognized.

According to a fifth aspect of the disclosure, an electronic device is provided. The electronic device includes: at least one processor and a memory communicatively coupled to the at least one processor. The memory stores instructions executable by the at least one processor, and when the instructions are executed by the at least one processor, the at least one processor is caused to implement the method of the first aspect of the disclosure or the method of the second aspect of the disclosure.

According to a sixth aspect of the disclosure, a non-transitory computer-readable storage medium storing computer instructions is provided. The computer instructions are configured to cause a computer to implement the method of the first aspect of the disclosure or the method of the second aspect of the disclosure.

According to a seventh aspect of the disclosure, a computer program product including computer programs is provided. The computer programs are stored in a readable storage medium. At least one processor of the electronic device can read the computer programs from the readable storage medium, and when the computer programs are executed by the at least one processor, the electronic device is caused to implement the method of the first aspect of the disclosure.

### BRIEF DESCRIPTION OF THE DRAWINGS

The drawings are used to better understand solutions and do not constitute a limitation to the disclosure, in which:
FIG. 1 is a schematic diagram of a first embodiment of the disclosure.
FIG. 2 is a schematic diagram of a second embodiment of the disclosure.
FIG. 3 is a schematic diagram of a method for recognizing text of the disclosure.
FIG. 4 is a schematic diagram of a third embodiment of the disclosure.
FIG. 5 is a schematic diagram of a fourth embodiment of the disclosure.
FIG. 6 is a schematic diagram of a fifth embodiment of the disclosure.
FIG. 7 is a schematic diagram of a sixth embodiment of the disclosure.
FIG. 8 is a schematic diagram of a seventh embodiment of the disclosure.
FIG. 9 is a schematic diagram of an eighth embodiment of the disclosure.
FIG. 10 is a block diagram of an electronic device configured to implement a method for recognizing text or a method for training a text recognition model in embodiments of the disclosure.

### DETAILED DESCRIPTION

The following describes some embodiments of the disclosure with reference to the accompanying drawings, which includes various details of embodiments of the disclosure to facilitate understanding and shall be considered merely exemplary. For clarity and conciseness, descriptions of well-known functions and structures are omitted in the following description.

OCR is a process in which an electronic device (e.g., a scanner or digital camera) examines characters printed on paper, determines their shapes by detecting dark and light patterns, and translates the shapes into computer text via the character recognition method. That is, for the printed characters, OCR is the technology used to optically convert the text in a paper file into an image file containing black and white dot matrixes and convert the text in the image into a text format using recognition software for further editing and processing by character processing software.

The attention mechanism and connectionist temporal classification (CTC) are typical method of OCR.

The attention mechanism is used to obtain the text content in the image to be recognized through attention enhancement and reinforcement of historical recognition content, while the CTC focuses on prediction of text string in the image to be recognized, to obtain the text content in the image to be recognized.

However, if the text content in the image to be recognized is recognized based on the attention mechanism, especially when the text in the image to be recognized is long, error accumulation may easily occur, resulting in low accuracy of text recognition.

If the text content in the image to be recognized is recognized based on the CTC, a typical method of CTC is a text recognition network (i.e., convolutional recurrent neural network (CRNN)) to obtain the text content in the image to be recognized by prediction, but the text content lacks semantic understanding and tends to lose part of the full text string, which leads to the technical problem of low accuracy of the determined text content in the image to be recognized.

In order to avoid at least one of the above technical problems, the inventors of the disclosure have obtained the inventive idea of the disclosure with inventive works. The inventive idea includes: obtaining an image sequence feature of an image to be recognized; decoding the image sequence feature to obtain a full text string of the image to be recognized; and performing a semantic enhancement process on the full text string to obtain a text sequence feature, to determine the text content of the image to be recognized based on the full text string and the text sequence feature, in which the image sequence feature, the full text string, and the text sequence feature are of the same length.

Based on the above inventive idea, the disclosure provides a method for recognizing text, a method for training a text recognition model, an apparatus for recognizing text, and an apparatus for training a text recognition model, and relates to the field of artificial intelligence technology, in particular to the field of deep learning and computer vision technology, which can be used in OCR and other scenes to improve the accuracy and reliability of text recognition.

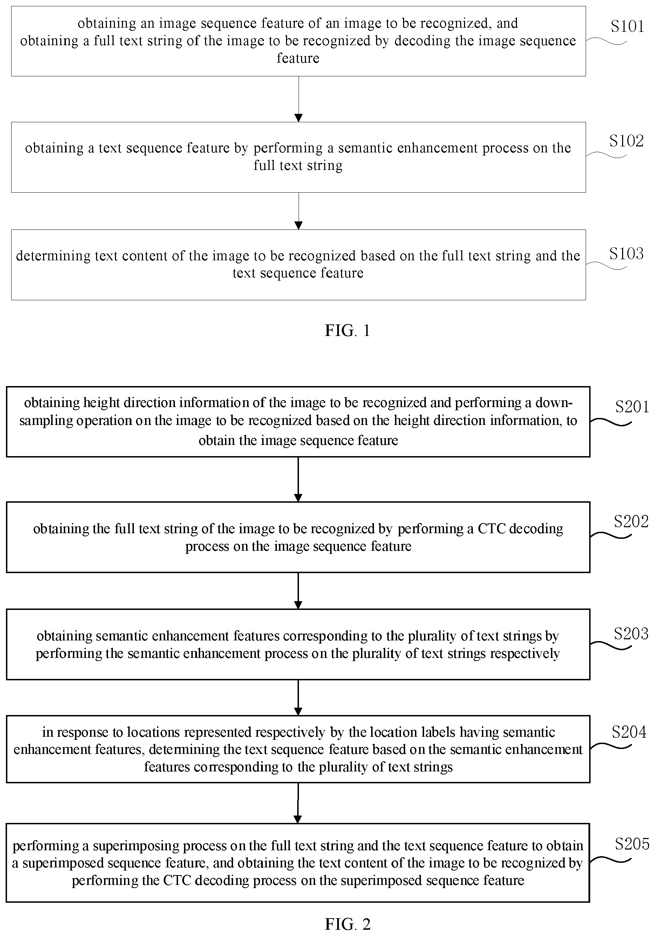

FIG. 1 is a schematic diagram of a first embodiment of the disclosure. As shown in FIG. 1, the method for recognizing text in some embodiments of the disclosure includes the following steps.

At step S101, an image sequence feature of an image to be recognized is obtained, and a full text string of the image to be recognized is obtained by decoding the image sequence feature.

For example, the execution body of some embodiments may be an apparatus for recognizing text, which may be a server (such as a cloud server or a local server), a computer, a terminal device, a processor, or a chip, which is not limited in some embodiments.

It is also understood that at this step, the apparatus for recognizing text obtains the image to be recognized, performs a feature extraction process on the image to be recognized to obtain the image sequence feature of the image to be recognized, and decoding the image sequence feature to obtain the full text string.

It is noted that some embodiments do not limit the specific decoding method, and any method that can obtain the full text string of the image to be recognized may be used. That is, in some embodiments, the full text string is a complete text string with no missing, which represents all the text strings of all the text features in the image to be recognized.

The method for obtaining an image to be recognized may also be implemented in various ways, which is not limited in some embodiments.

For example, the apparatus for recognizing text can be connected to an image acquisition device and receives the image to be recognized sent by the image acquisition device.

For another example, the apparatus for recognizing text may provide a tool for loading images through which a user may transmit the image to be recognized to the apparatus for recognizing text.

The tool for loading images may be an interface for connecting with an external device, such as an interface for connecting with other storage devices, through which the image to be recognized transmitted by the external device can be obtained. The tool for loading images can also be a display device, for example, the apparatus for recognizing text can have an interface on the display device for loading images, through which the user can import the image to be recognized to the apparatus for recognizing text, so that the apparatus for recognizing text can obtain the imported image to be recognized.

At step S 102, a text sequence feature is obtained by performing a semantic enhancement process on the full text string, in which the image sequence feature, the full text string, and the text sequence feature are of the same length.

In some embodiments, through the feature of "performing the semantic enhancement process on the full text string", the decoding process is combined with the semantic enhancement process, so that the obtained text sequence feature can be more accurate and reliable for representing the feature of the text content of the image to be recognized.

In addition, since the image sequence feature, the full text string, and the text sequence feature are of the same length, and the text string is the full text string, the text sequence feature has strong integrality and comprehensiveness.

It is understood that some embodiments do not limit the method of semantic enhancement process, that is, the text string can be semantically enhanced using different methods, so that the resulting text sequence feature is of the same length as the text string.

For example, the semantic enhancement model can be trained in advance and the text string can be enhanced semantically by the semantic enhancement model.

At step S103, text content of the image to be recognized is determined based on the full text string and the text sequence feature.

It is noted that since the text string is the full text string, and the text sequence feature is obtained by semantically enhancing the full text string, the text content of the image to be recognized has high comprehensiveness and integrality, and the text content of the image to be recognized also has the content of semantic dimension, thus the text content of the image to be recognized has the technical effects of high accuracy and reliability.

Thus, in combination with the above analysis, embodiments of the disclosure provide a method for recognizing text. The method includes: obtaining an image sequence feature of an image to be recognized; decoding the image sequence feature to obtain a full text string of the image to be recognized; and performing a semantic enhancement process on the full text string to obtain a text sequence feature, to determine the text content of the image to be recognized based on the full text string and the text sequence feature, in which the image sequence feature, the full text string, and the text sequence feature are of the same length. In some embodiments, the full text string is obtained by decoding the image sequence feature, and the text sequence feature is obtained by performing the semantic enhancement process on the full text string, so that the text content is determined in combination with the full text string and the text sequence feature, which may avoid the disadvantages of low accuracy due to the error accumulation caused by recognition based on the attention mechanism in the related art and avoid the disadvantages of low reliability due to easy loss of the text string caused by the CRNN prediction in the related art. By performing the semantic enhancement process on the full text string, the recognition process can be more comprehensive and complete, so that when determining the text content based on the full text string and the text sequence feature, not only the completeness and comprehensiveness of the elements used to determine the text content, but also the content of the elements used to determine the text content at the level of semantic understanding are fully considered, thereby achieving the technical effects of accuracy, validity, and reliability of text recognition.

FIG. 2 is a schematic diagram of a second embodiment of the disclosure. As shown in FIG. 2, the method for recognizing text of some embodiments of the disclosure includes the following steps.

At step S201, height direction information of the image to be recognized is obtained and a down-sampling operation is performed on the image to be recognized based on the height direction information, to obtain the image sequence feature.

It is to be noted that the same features as in the above-mentioned embodiments are not repeated in some embodiments.

It is to be understood that the image to be recognized has height direction information and horizontal direction information. In some embodiments, but only the height direction information of the image to be recognized may be obtained to perform a height direction down-sampling process on the image to be recognized based on the height direction information while excluding a horizontal direction down-sampling process, to improve the efficiency of determining the image sequence feature and saving resources, when ensuring that the image sequence feature can more accurately represent the image to be recognized.

In some embodiments, the image sequence feature may be obtained by a network model, such as, a visual graphics generator, a residual network (ResNet), an image classification model (DenseNet), a vision transformer, or the like.

At step S202, the full text string of the image to be recognized is obtained by performing a CTC decoding process on the image sequence feature, in which the image sequence feature and the full text string are of the same length.

In some embodiments, CTC is used to decode the image sequence feature, to improve the decoding efficiency and obtain a full and comprehensive text string (i.e., the full text string).

In some embodiments, step S202 includes the following steps.

At the first step, the CTC loss corresponding to the decoding process location is calculated when the CTC decoding process is performed on the image sequence feature. The CTC loss is used to indicate whether there is a text string at the decoding process location.

At the second step, the full text string is obtained by constraining the decoding process on the image sequence feature based on the CTC loss.

That is, in some embodiments, the full text string is determined by constraining based on the CTC loss, so that the full text string is a complete text string with no missing strings, which can completely and reliably represent the features of the image to be recognized.

In some embodiments, at the second step, if no text string is obtained by decoding at the decoding process location, and the CTC loss indicating the presence of the text string at the decoding process location, the decoding process is performed at the decoding process location repeatedly until the text string at the decoding process is obtained.

For example, for each decoding process location, the decoding process location corresponds to the CTC loss. Since the CTC loss can indicate the presence or non-presence of the text string at the decoding process location, if no text string is obtained by decoding at the decoding process location through the CTC decoding process, but the CTC loss indicates that the decoding process location should have the text string, it indicates that there is a parsing failure at the decoding process location, then CTC decoding process is performed at the decoding process location again until the text string at the decoding process is obtained.

Through the CTC loss constraint of some embodiments, the full text string can be determined to avoid the disadvantage of text string loss caused by error decoding failure, so that the image sequence feature and the full text string are of the same length, and the efficiency and reliability of the decoding process can be improved.

At step S203, semantic enhancement features corresponding to the plurality of text strings are obtained by performing the semantic enhancement process on the plurality of text strings respectively, in which the full text string includes plurality of text strings, and the plurality of text strings have location labels respectively.

In some embodiments, a semantic inference model is trained, and the semantic enhancement process is performed on each text string using the semantic inference model, to obtain the corresponding semantic enhancement feature for the text string.

For example, the semantic inference model can be trained by the convolutional neural network (CNN), the transformer encoder, or the encoder-decoder structure, which is not limited in some embodiments.

In some embodiments, when training the semantic inference model, the text data can be sampled for training instead of relying on the image data, that is, the semantic inference model can be obtained by training the sampled pure text corpus, to improve the accuracy and reliability of the semantic inference model, and when the semantic enhancement process is performed on the text string by the semantic inference model, the accuracy of the semantic enhancement process can be improved.

At step S204, in response to locations represented respectively by the location labels having semantic enhancement features, the text sequence feature is determined based on the semantic enhancement features corresponding to the plurality of text strings.

In some embodiments, since the locations represented respectively by the location labels have semantic enhancement features, the text sequence feature can be obtained in the same length as the text string, to improve the comprehensive and accuracy of the text sequence feature.

In other embodiments, there may also be a situation in which at least part of the positions represented by the location labels do not have semantic enhancement features. For a position represented by a location label, if the position represented by the position label has no semantic enhancement feature due to reasons such as failure of the semantic enhancement process, the semantic enhancement process is performed on the text string corresponding to the position represented by the position label again, to obtain the semantic enhancement feature corresponding to the position represented by the position label, and the text sequence feature is determined according to the semantic enhancement features corresponding to the text strings.

For example, it is also possible to obtain the semantic enhancement features corresponding to the text strings by means of CTC loss constraint, so that the text sequence feature of the same length as the text string can be obtained, then the text sequence feature has high accuracy and integrity.

At step S205, a superimposing process is performed on the full text string and the text sequence feature to obtain a superimposed sequence feature, and the text content of the image to be recognized is obtained by performing the CTC decoding process on the superimposed sequence feature.

The methods of the superposition process are not limited in the disclosure, for example, the superposition process can be realized by adding or multiplying, the examples are not fully limited here.

Based on the above analysis, the text string is the full text string representing the image to be recognized, and the text sequence feature is of the same length as the full text string which is also the full text sequence feature representing the image to be recognized, and the text sequence feature is the semantically enhanced feature, so that through superimposing the full text string and the text sequence feature, it is possible to achieve the technical effects of comprehensiveness, accuracy, reliability and validity of the text content of the image to be recognized within a time limit.

In some embodiments, obtaining the text content of the image to be recognized by performing the CTC decoding process on the superimposed sequence feature may include: obtaining decoded text information by performing the CTC decoding process on the superimposed sequence feature, and obtaining the text content of the image to be recognized by performing a de-duplication process on the text information.

It is noted that when the CTC decoding process is performed on the image sequence feature to obtain the full text string, in order to ensure the comprehensiveness of the full text string, the full text string is obtained while no de-duplication process is required. After obtaining the superimposed sequence feature, in order to make the output recognition result (i.e., the text content of the image to be recognized) more accurate and avoid redundant information, in the CTC decoding process, after the decoding process, the text information is de-duplicated after the decoding process to remove the redundant information, so that more accurate and reliable text content of the image to be recognized is obtained.

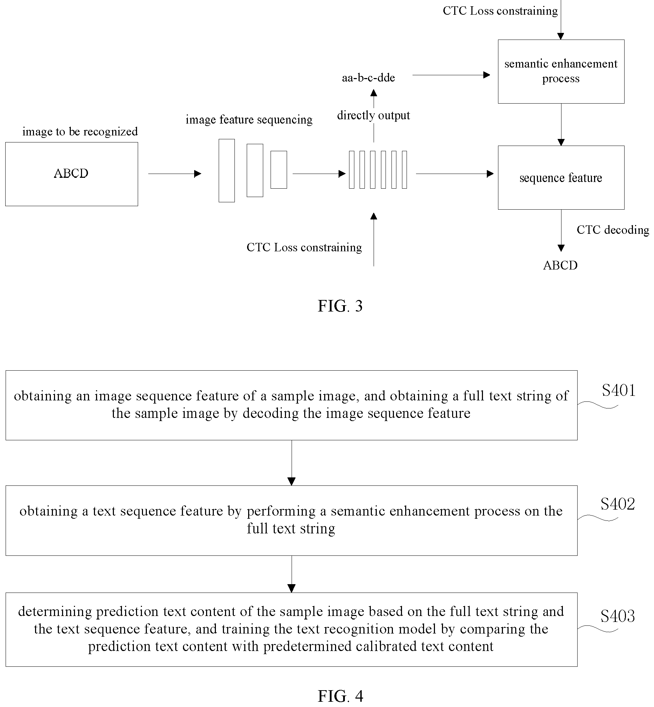

In order to provide the reader with a deeper understanding of the implementation principles of embodiments of the disclosure, the implementation principles of embodiments of the disclosure are exemplarily described in combination with FIG. 3.

As shown in FIG. 3, the image to be recognized is obtained, and the image to be recognized includes the text "ABCD" (it should be understood that the text only indicates that there are four different words in the text, i.e., ABCD are different words).

Image feature sequencing is performed on the image to be recognized (image feature sequencing as shown in FIG. 3), so that the image sequence feature of the image to be recognized is obtained.

After the CTC decoding process is performed on the image sequence feature, the decoding process is constrained based on the decoding process location (CTC loss constraint as described in FIG. 3), and correspondingly, the text string is output directly.

In combination with the above analysis, the decoding process here does not require the de-duplication process to ensure that the text string is the full text string. Therefore, as shown in FIG. 3, the output of the decoding process here is "direct output" and the resulting text string can be "aa-b-c-dde" as shown in FIG. 3 (similarly, "abcde" here is only an indication of a possible number of strings and a possible number of identical strings, not the content of the string).

The text string is semantically enhanced. As shown in FIG. 3, the semantic enhancement process is performed on the text string "abcde" by a pre-trained semantic inference model, and during the semantic enhancement process, the constraint process is performed based on the location labels (CTC loss constraint as described in FIG. 3), and correspondingly, the text sequence feature is output directly.

Similarly, in order to ensure that the text sequence feature is a full text sequence feature that is of the same length as the text string, no de-duplication is required.

As shown in FIG. 3, on the one hand, the text string is semantically enhanced to obtain the text sequence feature, and on the other hand, the text string is then superimposed with the text sequence feature to obtain the superimposed sequence feature (such as the sequence feature shown in FIG. 3).

After obtaining the superimposed sequence feature, the superimposed sequence feature is subjected to the CTC decoding process (CTC decoding as shown in FIG. 3), to obtain the text content of the image to be recognized, such as "ABCD" as shown in FIG. 3.

It should be noted that the CTC decoding process here includes the decoding process and the de-duplication process.

Specific implementations of the implementation principles of the method for recognizing text of the embodiment as shown above in FIG. 3 can be found described in the method embodiments above and will not be repeated here.

It is noted that in some other embodiments, it is also possible to pre-train a text recognition model to recognize the image to be recognized, so as to obtain the text content of the image to be recognized.

Regarding the implementation principles of the text recognition model for recognizing the image to be recognized, the implementation principles of the method for recognizing text described above can be used as reference, for example, the text recognition model is used to implement the above method for recognizing text to obtain the text content of the image to be recognized. The method for training a text recognition model can be referred to the following embodiments.

FIG. 4 is a schematic diagram of a third embodiment of the disclosure. As shown in FIG. 4, the method for training a text recognition model of some embodiments of the disclosure include the following steps.

At step S401, an image sequence feature of a sample image is obtained, and a full text string of the sample image is obtained by decoding the image sequence feature.

For example, the execution subject of some embodiments may be an apparatus for training a text recognition model (hereinafter referred to as a training device), and the training device may be a server (e.g., a cloud server or a local server), a computer, a terminal device, a processor, or a chip, which is not limited in some embodiments.

It is appreciated that the training device may be the same device as the apparatus for recognizing text, or may be different from the apparatus for recognizing text, which is not limited in some embodiments.

In some embodiments, obtaining the full text string of the sample image by decoding the image sequence feature includes: obtaining the full text string of the sample image by performing a CTC decoding process on the image sequence feature.

In some embodiments, obtaining the full text string of the sample image by performing the CTC decoding process on the image sequence feature includes the following steps.

In the first step, when the CTC decoding process is performed on the image sequence feature, the CTC loss corresponding to the decoding process location is calculated, and the CTC loss is used to represent the presence of a text string at the decoding process location.

In the second step, the decoding process performed on the image sequence feature is constrained according to CTC loss to obtain the text string.

In some embodiments, obtaining the full text string by constraining the decoding process on the image sequence feature based on the CTC loss includes: in response to no text string being obtained by decoding at the decoding process location, and the CTC loss indicating the presence of the text string at the decoding process location, performing the decoding process at the decoding process location repeatedly until the text string at the decoding process location is obtained.

In some embodiments, the image sequence feature is obtained by acquiring height direction information of the sample image and performing a down-sampling operation on the sample image based on the height direction information.

At step S402, a text sequence feature is obtained by performing a semantic enhancement process on the full text string, in which the image sequence feature, the full text string, and the text sequence feature are of the same length.

In some embodiments, the full text string includes a plurality of text strings, and the plurality of text strings have location labels respectively, and obtaining the text sequence feature by performing the semantic enhancement process on the full text string, includes: obtaining semantic enhancement features corresponding to the plurality of text strings by performing the semantic enhancement process on the plurality of text strings respectively; and in response to locations represented respectively by the location labels having semantic enhancement features, determining the text sequence feature based on the semantic enhancement features corresponding to the plurality of text strings.

In some embodiments, if the location represented by any location label has no semantic enhancement feature, the text string corresponding to the location represented by the location label is semantically enhanced again to obtain the semantic enhancement feature corresponding to the location represented by the location label, and the text sequence feature is determined based on the semantic enhancement features corresponding to the text strings.

In some embodiments, based on the above analysis, it can be shown that the semantic inference model for performing the semantic enhancement process can be pre-trained based on the prediction text corpus, and the parameters of the semantic inference model can be adapted during the overall process of training the text recognition model, to improve the training efficiency and the training reliability and validity.

At step S403, prediction text content of the sample image is determined based on the full text string and the text sequence feature, and the text recognition model is trained by comparing the prediction text content with predetermined calibrated text content, in which the text recognition model is configured to recognize text content of an image to be recognized.

In some embodiments, determining the prediction text content of the sample image based on the full text string and the text sequence feature includes: performing a superimposing process on the full text string and the text sequence feature to obtain a superimposed sequence feature; and obtaining the text content of the sample image by performing the CTC decoding process on the superimposed sequence feature.

In some embodiments, obtaining the text content of the sample image by performing the CTC decoding process on the superimposed sequence feature includes: performing the CTC decoding process on the superimposed sequence feature to obtain the decoded text information, and performing a de-duplication process on the text information to obtain the text content of the sample image.

In some embodiments, training the text recognition model by comparing the prediction text content with the predetermined calibrated text content includes: calculating a loss between the prediction text content and the predetermined calibrated text content, and adjusting the parameters of a basic network model based on the loss until the loss is less than a preset loss threshold or a number of iterations reaches a preset iteration threshold, and determining the basic network model when the loss is less than the preset loss threshold or the number of iterations reaches the preset iteration threshold as the text recognition model.

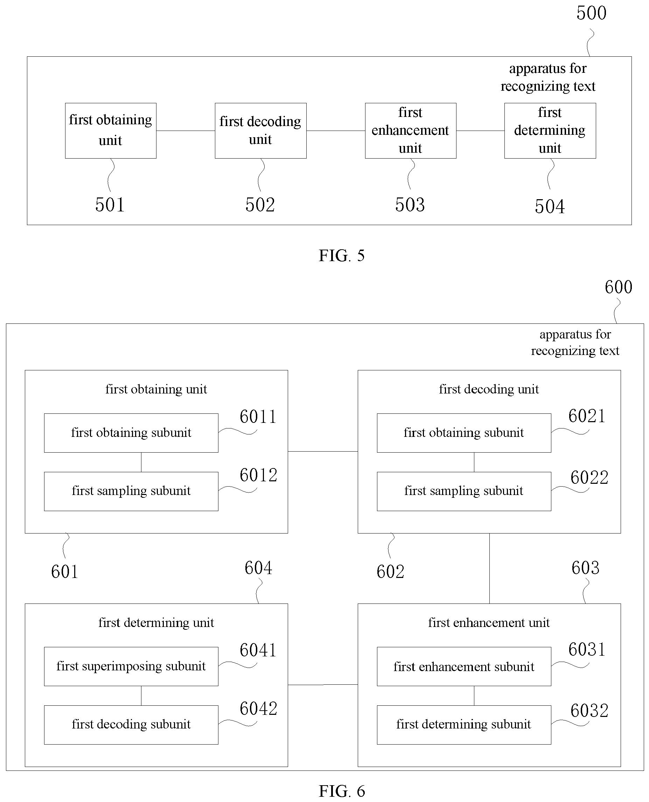

FIG. 5 is a schematic diagram of the fourth embodiment of the disclosure. As shown in FIG. 5, an apparatus for recognizing text 500 of this embodiment includes: a first obtaining unit 501, a first decoding unit 502, a first enhancement unit 503 and a first determining unit 504.

The first obtaining unit 501 is configured to obtain an image sequence feature of an image to be recognized.

The first decoding unit 502 is configured to obtain a full text string of the image to be recognized by decoding the image sequence feature.

The first enhancement unit 503 is configured to obtain a text sequence feature by performing a semantic enhancement process on the full text string, in which the image sequence feature, the full text string, and the text sequence feature are of the same length.

The first determining unit 504 is configured to determine text content of the image to be recognized based on the full text string and the text sequence feature.

FIG. 6 is a schematic diagram of the fifth embodiment of the disclosure. As shown in FIG. 6, an apparatus for recognizing text 600 of this embodiment includes: a first obtaining unit 601, configured to obtain an image sequence feature of an image to be recognized.

As shown in FIG. 6, in some embodiments, the first obtaining unit 601 includes: a first obtaining subunit 6011 and a first sampling subunit 6012.

The first obtaining subunit 6011 is configured to obtain height direction information of the image to be recognized.

The first sampling subunit 6012 is configured to perform a down-sampling operation on the image to be recognized based on the height direction information, to obtain the image sequence feature.

The first decoding unit 602 is further configured to: obtain the full text string of the image to be recognized by performing a decoding process on the image sequence feature.

In some embodiments, the first decoding unit 602 is further configured to: obtain the full text string of the image to be recognized by performing a CTC decoding process on the image sequence feature.

As shown in FIG. 6, in some embodiments, the first decoding unit 602 includes: a first calculating subunit 6021 and a first constraining subunit 6022.

The first calculating subunit 6021 is configured to calculate, during performing the CTC decoding process on the image sequence feature, a CTC loss corresponding to a decoding process location, the CTC loss for indicating a presence or non-presence of a text string at the decoding process location.

The first constraining subunit 6022 is configured to obtain the full text string by constraining the decoding process on the image sequence feature based on the CTC loss.

In some embodiments, the first constraining subunit 6022 is configured to: in response to no text string being obtained by decoding at the decoding process location, and the CTC loss indicating the presence of the text string at the decoding process location, perform the decoding process at the decoding process location repeatedly until the text string at the decoding process is obtained.

The first enhancement unit 603 is configured to obtain a text sequence feature by performing a semantic enhancement process on the full text string, in which the image sequence feature, the full text string, and the text sequence feature are of the same length

In some embodiments, the full text string includes a plurality of text strings, the plurality of text strings have location labels respectively. As shown in FIG. 6, the first enhancement unit 603 includes: a first enhancement subunit 6031 and a first determining subunit 6032.

The first enhancement subunit 6031 is configured to obtain semantic enhancement features corresponding to the plurality of text strings by performing the semantic enhancement process on the plurality of text strings respectively.

The first determining subunit 6032 is configured to, in response to locations represented respectively by the location labels having semantic enhancement features, determine the text sequence feature based on the semantic enhancement features corresponding to the plurality of text strings.

In some embodiments, the first enhancement subunit 6031 is further configured to, in response to a location represented by any of the location labels having no semantic enhancement feature, obtain a semantic enhancement feature corresponding to the location represented by the location label by performing the semantic enhancement process on the text string corresponding to the location represented by the location label again.

Correspondingly, the first determining subunit 6032 is further configured to determine the text sequence feature based on the semantic enhancement features corresponding to the plurality of text strings.

The first determining unit 604 is configured to determine text content of the image to be recognized based on the full text string and the text sequence feature.

As shown in FIG. 6, in some embodiments, the first determining unit 604 includes: a first superimposing subunit 6041 and a first decoding subunit 6042.

The first superimposing subunit 6041 is configured to perform a superimposing process on the full text string and the text sequence feature to obtain a superimposed sequence feature.

The first decoding subunit 6042 is configured to obtain the text content of the image to be recognized by performing the CTC decoding process on the superimposed sequence feature.

In some embodiments, the first decoding subunit 6042 includes: a first decoding module and a first deduplication module.

The first decoding module is configured to obtain decoded text information by performing the CTC decoding process on the superimposed sequence feature.

The first deduplication module is configured to obtain the text content of the image to be recognized by performing a de-duplication process on the text information.

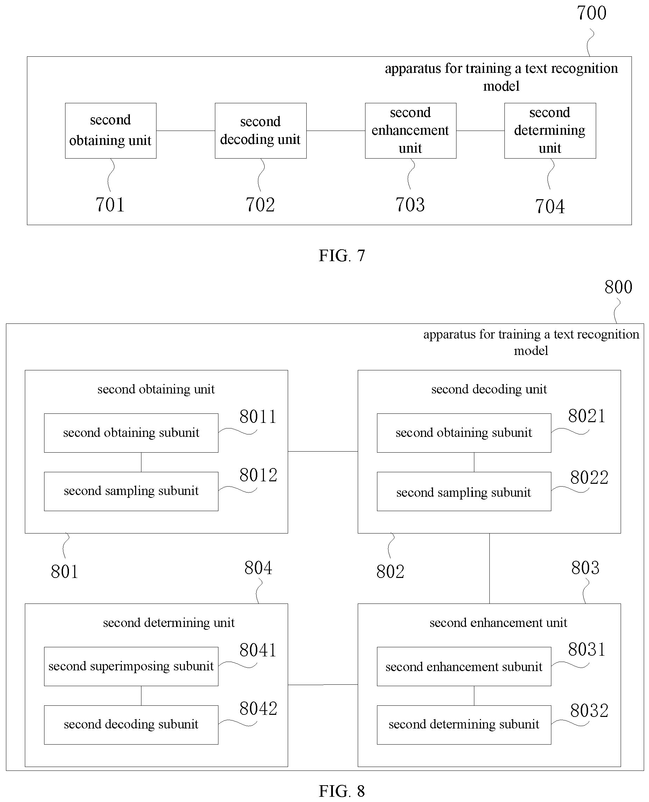

FIG. 7 is a schematic diagram of the sixth embodiment of the disclosure. As shown in FIG. 7, an apparatus for training a text recognition model 700 of this embodiment of the disclosure includes: a second obtaining unit 701, a second decoding unit 702, a second enhancement unit 703, a second determining unit 704 and a training unit 705.

The second obtaining unit 701 is configured to obtain an image sequence feature of a sample image.

The second decoding unit 702 is configured to obtain a full text string of the sample image by decoding the image sequence feature.

The second enhancement unit 703 is configured to obtain a text sequence feature by performing a semantic enhancement process on the full text string, in which the image sequence feature, the full text string, and the text sequence feature are of the same length.

The second determining unit 704 is configured to determine prediction text content of the sample image based on the full text string and the text sequence feature.

The training unit 705 is configured to train the text recognition model by comparing the prediction text content with predetermined calibrated text content, in which the text recognition model is configured to recognize text content of an image to be recognized.

FIG. 8 is a schematic diagram of the seventh embodiment of the disclosure. As shown in FIG. 8, an apparatus for training a text recognition model 800 of this embodiment of the disclosure includes: a second obtaining unit 801, configured to obtain an image sequence feature of a sample image.

As shown in FIG. 8, in some embodiments, the second obtaining unit 801 includes: a second obtaining subunit 8011 and a second sampling subunit 8012.

The second obtaining subunit 8011 is configured to obtain height direction information of the image to be recognized.

The second sampling subunit 8012 is configured to perform a down-sampling operation on the image to be recognized based on the height direction information, to obtain the image sequence feature.

The second decoding unit 802 is configured to obtain a full text string of the sample image by decoding the image sequence feature.

In some embodiments, the second decoding unit 802 is configured to obtain a full text string of the sample image by performing a CTC decoding process on the image sequence feature.

As shown in FIG. 8, in some embodiments, the second decoding unit 802 includes: a second calculating subunit 8021 and a second constraining subunit 8022.

The second calculating subunit 8021 is configured to calculate, during performing the CTC decoding process on the image sequence feature, a CTC loss corresponding to a decoding process location, the CTC loss being for indicating a presence or non-presence of a text string at the decoding process location.

The second constraining subunit 8022 is configured to obtain the full text string by constraining the decoding process on the image sequence feature based on the CTC loss.

In some embodiments, the second constraining subunit 8022 is configured to, in response to no text string being obtained by decoding at the decoding process location, and the CTC loss indicating the presence of the text string at the decoding process location, perform the decoding process at the decoding process location repeatedly until the text string is obtained.

The second enhancement unit 803 is configured to obtain a text sequence feature by performing a semantic enhancement process on the full text string, in which the image sequence feature, the full text string and the text sequence feature are of the same length.

In some embodiments, the full text string includes a plurality of text strings, the plurality of text strings have location labels respectively, as shown in FIG. 8, the second enhancement unit 803 includes: a second enhancement subunit 8031 and a second determining subunit 8032.

The second enhancement subunit 8031 is configured to obtain semantic enhancement features corresponding to the plurality of text strings by performing the semantic enhancement process on the plurality of text strings respectively.

The second determining subunit 8032 is configured to determine, in response to locations represented respectively by the location labels having semantic enhancement features, the text sequence feature based on the semantic enhancement features corresponding to the plurality of text strings.

In some embodiments, the second enhancement subunit 8031 is further configured to: in response to a location represented by any of the location labels having no semantic enhancement feature, obtain a semantic enhancement feature corresponding to the location represented by the location label by performing the semantic enhancement process on the text string corresponding to the location represented by the location label again.

Correspondingly, the second determining subunit 8032 is further configured to: determine the text sequence feature based on the semantic enhancement features corresponding to the plurality of text strings.

The second determining unit 804 is configured to determine prediction text content of the sample image based on the full text string and the text sequence feature.

As shown in FIG. 8, in some embodiments, the second determining unit 804 includes: a second superimposing subunit 8041 and a second decoding subunit 8042.

The second superimposing subunit 8041 is configured to perform a superimposing process on the full text string and the text sequence feature to obtain a superimposed sequence feature.

The second decoding subunit 8042 is configured to obtain the text content of the image to be recognized by performing the CTC decoding process on the superimposed sequence feature.

In some embodiments, the second decoding subunit 8042 includes: a first decoding module and a first deduplication module.

The first decoding module is configured to obtain decoded text information by performing the CTC decoding process on the superimposed sequence feature.

The first deduplication module is configured to obtain the text content of the image to be recognized by performing a de-duplication process on the text information.

The training unit 805 is configured to train the text recognition model by comparing the prediction text content with predetermined calibrated text content, in which the text recognition model is configured to recognize text content of an image to be recognized.

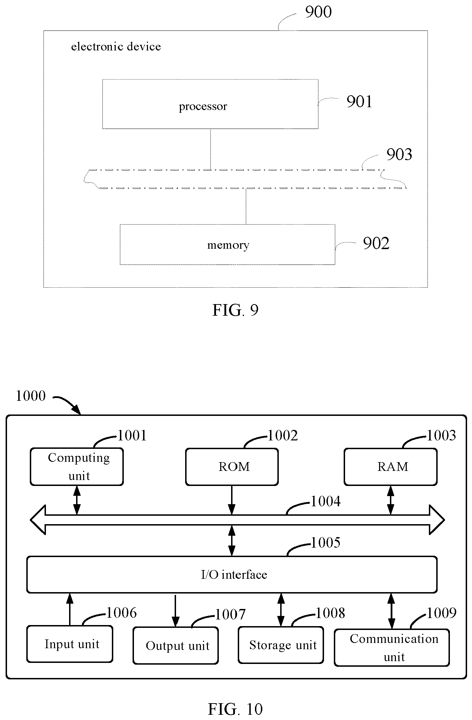

FIG. 9 is a schematic diagram of the eighth embodiment of the disclosure. As shown in FIG. 9, the electronic device 900 in the disclosure may include: a processor 901 and a memory 902.

The memory 902 is used to store programs. The memory 902 may include a volatile memory, such as a Random Access Memory (RAM), a Static Random-Access Memory (SRAM), and a Double Data Rate Synchronous Dynamic Random Access Memory (DDR SDRAM). The memory 902 may also include a non-volatile memory, such as a flash memory. The memory 902 is used to store computer programs (e.g., application programs and functional modules for implementing the above method) and computer instructions. The above computer programs and computer instructions may be stored in one or more memories 902 for distinguishing. The above computer programs, computer instructions, and data can be called by the processor 901.

The processor 901 is used for executing computer programs stored in the memory 902 to implement the various steps in the method involved in the above embodiments.

The relevant descriptions in the previous method embodiments can be used as reference.

The processor 901 and the memory 902 may be separate from each other or may be integrated together. When the processor 901 and the memory 902 are separated, the memory 902 and the processor 901 may be coupled and connected via a bus 903.

The electronic device of this embodiment can perform the technical solution of the method described above with the same specific implementation process and technical principles, which are not repeated here.

According to the embodiments of the disclosure, the disclosure provides an electronic device, a readable storage medium and a computer program product.

According to the embodiments of the disclosure, the disclosure also provides a computer program product including computer programs. The computer programs are stored in a readable storage medium, at least one processor of the electronic device can read the computer programs from the readable storage medium, when the computer programs are executed by the at least one processor, the electronic device is caused to perform the solution provided by any of the above embodiments.

FIG. 10 is a block diagram of an example electronic device 1000 used to implement the embodiments of the disclosure. Electronic devices are intended to represent various forms of digital computers, such as laptop computers, desktop computers, workbenches, personal digital assistants, servers, blade servers, mainframe computers, and other suitable computers. Electronic devices may also represent various forms of mobile devices, such as personal digital processing, cellular phones, smart phones, wearable devices, and other similar computing devices. The components shown here, their connections and relations, and their functions are merely examples, and are not intended to limit the implementation of the disclosure described and/or required herein.

As illustrated in FIG. 10, the device 1000 includes: a computing unit 1001 performing various appropriate actions and processes based on computer programs stored in a Read-Only Memory (ROM) 1002 or computer programs loaded from a storage unit 1008 to a RAM 1003. In the RAM 1003, various programs and data required for the operation of the device 1000 are stored. The computing unit 1001, the ROM 1002, and the RAM 1003 are connected to each other through a bus 1004. An input/output (I/O) interface 1005 is also connected to the bus 1004.

Components in the device 1000 are connected to the I/O interface 1005, including: an inputting unit 1006, such as a keyboard, a mouse; an outputting unit 1007, such as various types of displays, speakers; a storage unit 1008, such as a disk, an optical disk; and a communication unit 1009, such as network cards, modems, and wireless communication transceivers. The communication unit 1009 allows the device 1000 to exchange information/data with other devices through a computer network such as the Internet and/or various telecommunication networks.

The computing unit 1001 may be various general-purpose and/or dedicated processing components with processing and computing capabilities. Some examples of computing unit 1001 include, but are not limited to, a CPU, a GPU, various dedicated AI computing chips, various computing units that run machine learning model algorithms, and a Digital Signal Processor (DSP), and any appropriate processor, controller and microcontroller. The computing unit 1001 executes the various methods and processes described above, such as the method for recognizing text, and the method for training a text recognition model. For example, in some embodiments, the above method may be implemented as a computer software program, which is tangibly contained in a machine-readable medium, such as the storage unit 1008. In some embodiments, part or all of the computer program may be loaded and/or installed on the device 1000 via the ROM 1002 and/or the communication unit 1009. When the computer program is loaded on the RAM 1003 and executed by the computing unit 1001, one or more steps of the method described above may be executed. Alternatively, in other embodiments, the computing unit 1001 may be configured to perform the method in any other suitable manner (for example, by means of firmware).

Various implementations of the systems and techniques described above may be implemented by a digital electronic circuit system, an integrated circuit system, Field Programmable Gate Arrays (FPGAs), Application Specific Integrated Circuits (ASICs), Application Specific Standard Products (ASSPs), System on Chip (SOCs), Complex Programmable Logic Devices (CPLDs), computer hardware, firmware, software, and/or a combination thereof. These various embodiments may be implemented in one or more computer programs, the one or more computer programs may be executed and/or interpreted on a programmable system including at least one programmable processor, which may be a dedicated or general programmable processor for receiving data and instructions from the storage system, at least one input device and at least one output device, and transmitting the data and instructions to the storage system, the at least one input device and the at least one output device.

The program code configured to implement the method of the disclosure may be written in any combination of one or more programming languages. These program codes may be provided to the processors or controllers of general-purpose computers, dedicated computers, or other programmable data processing devices, so that the program codes, when executed by the processors or controllers, enable the functions/operations specified in the flowchart and/or block diagram to be implemented. The program code may be executed entirely on the machine, partly executed on the machine, partly executed on the machine and partly executed on the remote machine as an independent software package, or entirely executed on the remote machine or server.

In the context of the disclosure, a machine-readable medium may be a tangible medium that may contain or store a program for use by or in combination with an instruction execution system, apparatus, or device. The machine-readable medium may be a machine-readable signal medium or a machine-readable storage medium. A machine-readable medium may include, but is not limited to, an electronic, magnetic, optical, electromagnetic, infrared, or semiconductor system, apparatus, or device, or any suitable combination of the foregoing. More specific examples of machine-readable storage medium include electrical connections based on one or more wires, portable computer disks, hard disks, RAM, ROM, Electrically Programmable Read-Only-Memory (EPROM), flash memory, fiber optics, Compact Disc Read-Only Memories (CD-ROM), optical storage devices, magnetic storage devices, or any suitable combination of the foregoing.

In order to provide interaction with a user, the systems and techniques described herein may be implemented on a computer having a display device (e.g., a Cathode Ray Tube (CRT) or a Liquid Crystal Display (LCD) monitor for displaying information to a user); and a keyboard and pointing device (such as a mouse or trackball) through which the user can provide input to the computer. Other kinds of devices may also be used to provide interaction with the user. For example, the feedback provided to the user may be any form of sensory feedback (e.g., visual feedback, auditory feedback, or haptic feedback), and the input from the user may be received in any form (including acoustic input, voice input, or tactile input).

The systems and technologies described herein can be implemented in a computing system that includes background components (for example, a data server), or a computing system that includes middleware components (for example, an application server), or a computing system that includes front-end components (for example, a user computer with a graphical user interface or a web browser, through which the user can interact with the implementation of the systems and technologies described herein), or include such background components, intermediate computing components, or any combination of front-end components. The components of the system may be interconnected by any form or medium of digital data communication (e.g., a communication network). Examples of communication networks include: Local Area Network (LAN), Wide Area Network (WAN), and the Internet.

The computer system may include a client and a server. The client and server are generally remote from each other and interacting through a communication network. The client-server relation is generated by computer programs running on the respective computers and having a client-server relation with each other. The server may be a cloud server, also known as a cloud computing server or a cloud host, which is a host product in the cloud computing service system, to solve the defects of difficult management and weak business scalability in the traditional physical host and Virtual Private Server (VPS) service. The server can also be a server of distributed system or a server combined with block-chain.

It should be understood that the various forms of processes shown above can be used to reorder, add or delete steps. For example, the steps described in the disclosure could be performed in parallel, sequentially, or in a different order, as long as the desired result of the technical solution disclosed in the disclosure is achieved, which is not limited herein.

The above specific embodiments do not constitute a limitation on the protection scope of the disclosure. Those skilled in the art should understand that various modifications, combinations, subcombinations and substitutions can be made according to design requirements and other factors.

## Claims

1. A method for recognizing text, comprising:
obtaining (S101) an image sequence feature of an image to be recognized;
obtaining (S 101) a full text string of the image to be recognized by decoding the image sequence feature;
obtaining (S102) a text sequence feature by performing a semantic enhancement process on the full text string, wherein the image sequence feature, the full text string, and the text sequence feature are of the same length; and
determining (S102) text content of the image to be recognized based on the full text string and the text sequence feature.

2. The method of claim 1, wherein obtaining (S101) the full text string of the image to be recognized by decoding the image sequence feature, comprises:
obtaining (S202) the full text string of the image to be recognized by performing a connectionist temporal classification (CTC) decoding process on the image sequence feature.

3. The method of claim 2, wherein obtaining (S202) the full text string of the image to be recognized by performing the CTC decoding process on the image sequence feature, comprises:
calculating, during performing the CTC decoding process on the image sequence feature, a CTC loss corresponding to a decoding process location, the CTC loss for indicating a presence or non-presence of a text string at the decoding process location; and
obtaining the full text string by constraining the decoding process on the image sequence feature based on the CTC loss.

4. The method of claim 3, wherein obtaining the full text string by constraining the decoding process on the image sequence feature based on the CTC loss, comprises:
in response to no text string being obtained by decoding at the decoding process location, and the CTC loss indicating the presence of the text string at the decoding process location, performing the decoding process at the decoding process location repeatedly until the text string at the decoding process is obtained.

5. The method of any one of claims 1-4, wherein the full text string comprises a plurality of text strings, the plurality of text strings have location labels respectively, and obtaining (S102) the text sequence feature by performing the semantic enhancement process on the full text string, comprises:
obtaining (S203) semantic enhancement features corresponding to the plurality of text strings by performing the semantic enhancement process on the plurality of text strings respectively; and
in response to locations represented respectively by the location labels having semantic enhancement features, determining (S204) the text sequence feature based on the semantic enhancement features corresponding to the plurality of text strings.

6. The method of claim 5, further comprising:
in response to a location represented by any of the location labels having no semantic enhancement feature, obtaining a semantic enhancement feature corresponding to the location represented by any of the location labels by performing the semantic enhancement process on the text string corresponding to the location represented by any of the location labels again, and determining the text sequence feature based on the semantic enhancement features corresponding to the plurality of text strings.

7. The method of any one of claims 1-6, wherein determining (S103) the text content of the image to be recognized based on the full text string and the text sequence feature, comprises:
performing (S205) a superimposing process on the full text string and the text sequence feature to obtain a superimposed sequence feature, and obtaining (S205) the text content of the image to be recognized by performing the CTC decoding process on the superimposed sequence feature.

8. The method of claim 7, wherein obtaining the text content of the image to be recognized by performing the CTC decoding process on the superimposed sequence feature, comprises:
obtaining decoded text information by performing the CTC decoding process on the superimposed sequence feature, and obtaining the text content of the image to be recognized by performing a de-duplication process on the text information.

9. The method of any one of claims 1-8, wherein obtaining (S101) the image sequence feature of the image to be recognized, comprises:
obtaining (S202) height direction information of the image to be recognized and performing (S202) a down-sampling operation on the image to be recognized based on the height direction information, to obtain the image sequence feature.

10. The method of any one of claims 1-9, further comprising:
obtaining the image to be recognized, wherein the text content of the image to be recognized is determined by implementing the method according to any one of claims 1-9 using a pre-trained text recognition model.

11. A method for training a text recognition model, comprising:
obtaining (S401) an image sequence feature of a sample image;
obtaining (S401) a full text string of the sample image by decoding the image sequence feature;
obtaining (S402) a text sequence feature by performing a semantic enhancement process on the full text string, wherein the image sequence feature, the full text string, and the text sequence feature are of the same length;
determining (S403) prediction text content of the sample image based on the full text string and the text sequence feature; and
training (S404) the text recognition model by comparing the prediction text content with predetermined calibrated text content, wherein the text recognition model is configured to recognize text content of an image to be recognized.

12. The method of claim 11, wherein obtaining (S401) the full text string of the sample image by decoding the image sequence feature, comprises:
obtaining the full text string of the sample image by performing a connectionist temporal classification (CTC) decoding process on the image sequence feature.

13. An electronic device, comprising:
at least one processor; and
a memory communicatively coupled to the at least one processor; wherein,
the memory stores instructions executable by the at least one processor, and when the instructions are executed by the at least one processor, the at least one processor is caused to implement the method of any one of claims 1-10 or the method of any one of claims 11-12.

14. A non-transitory computer-readable storage medium having computer instructions stored thereon, wherein the computer instructions are configured to cause a computer to implement the method of any one of claims 1-10 or the method of any one of claims 11-12.

15. A computer program product comprising computer programs, wherein when the computer programs are executed by a processor, the method of any one of claims 1-10 or the method of any one of claims 11-12 is implemented.
